# EUROPEAN PATENT APPLICATION

(11) **EP 4 418 650 A1**
(43) Date of publication of application: **21.08.2024**
(21) Application number: 22884925.3
(22) Date of filing: 02.03.2022
(51) Int. Cl.: H04N 19/119, H04N 19/103, H04N 19/176, G06N 3/08

(54) **VIDEO CODING METHOD, NETWORK DEVICE, AND STORAGE MEDIUM**

(30) Priority: 01.11.2021 CN 202111283790
(71) Applicant: Sanechips Technology Co., Ltd., Shenzhen, Guangdong 518055 (CN)
(72) Inventor: YI, Ziyao, Shenzhen, Guangdong 518057 (CN); XU, Ke, Shenzhen, Guangdong 518057 (CN); KONG, Dehui, Shenzhen, Guangdong 518057 (CN); SONG, Jianjun, Shenzhen, Guangdong 518057 (CN); REN, Cong, Shenzhen, Guangdong 518057 (CN)
(74) Representative: Canzler & Bergmeier Patentanwälte Partnerschaft mbB
(86) International application number: PCT/CN2022/078888
(87) International publication number: WO 2023/071008

(57) **Abstract**

A video coding method, a network device, and a computer-readable storage medium. The method comprises: performing reinforcement learning and network training on an acquired image sequence, so as to obtain optimized coding unit partition information corresponding to the image sequence (S100); according to optimized coding content, reference coding content, and a preset assessment index, obtaining game result information corresponding to the optimized coding content, wherein the optimized coding content is obtained according to the optimized coding unit partition information, and the reference coding content is obtained according to the image sequence (S200); and if it is determined that the game result information meets a preset game condition, determining a coding mode, which corresponds to the optimized coding unit partition information, to be a video coding mode for the image sequence (S300).

## Description

### CROSS REFERENCE TO RELATED APPLICATIONS

The present disclosure is based on and claims the priority to Chinese Patent Application No. 202111283790.5 field on November 01, 2021, the contents of which are incorporated herein by reference in their entirety.

### TECHNICAL FIELD

Embodiments of the present disclosure relate to, but are not limited to, the technical field of information processing, and in particular, to a video coding method, a network device, and a computer-readable storage medium.

### BACKGROUND

At present, on the premise of realizing the same video quality, intra-frame coding performed based on the Versatile Video Coding (VVC) standard can improve compression efficiency by about 50%, which provides an important guarantee of industrial application. In a compression process of video coding blocks, a block partitioning mode combining a quad-tree, a ternary tree or a binary tree is generally adopted in the VVC standard. In a whole block partitioning process, all possible partitioning modes need to be traversed recursively, so as to select the partitioning mode with the minimum rate-distortion cost as a final partitioning mode.

Although the above partitioning process can improve the video compression efficiency and meet requirements of existing video compression functions, the definition of videos is gradually increased with continuous development of image technology, for example, from the previous 1080P to the current 4K or even 8K, which makes the existing compression method unable to adapt to definition requirements of the videos. Moreover, algorithms adopted in the above partitioning process greatly increase calculation complexity and prolong calculation processing time, resulting in relatively low video coding efficiency and a big challenge to timeliness of video coding.

### SUMMARY

The following is a summary of the subject matter described in detail herein. The summary is not intended to limit the scope of the claims.

The embodiments of the present disclosure provide a video coding method, a network device, and a computer-readable storage medium.

In a first aspect, an embodiment of the present disclosure provides a video coding method, including: performing reinforcement learning network training on an acquired image sequence to obtain optimized coding unit partitioning information corresponding to the image sequence; obtaining game result information corresponding to optimized coding contents according to the optimized coding contents, reference coding contents, and a preset evaluation index, wherein the optimized coding contents are obtained according to the optimized coding unit partitioning information, and the reference coding contents are obtained according to the image sequence; and when it is determined that the game result information meets a preset game condition, determining a coding mode corresponding to the optimized coding unit partitioning information as a video coding mode for the image sequence.

In a second aspect, an embodiment of the present disclosure further provides a network device, including: a memory, a processor, and a computer program which is stored in the memory and executable by the processor, and the processor is configured to, when executing the computer program, perform the video coding method described in the first aspect.

In a third aspect, an embodiment of the present disclosure further provides a computer-readable storage medium storing computer-executable instructions configured to perform the video coding method described in the first aspect.

Other features and advantages of the present disclosure will be described in the following description, and can become partially apparent from the description or be understood through the implementation of the present disclosure. The objective and the other advantages of the present disclosure can be achieved and obtained through the structures particularly pointed out in the description, claims and drawings.

### BRIEF DESCRIPTION OF DRAWINGS

The accompany drawings are intended to provide a further understanding of the technical solutions of the present disclosure and constitute a part of the specification. Together with the embodiments of the present disclosure, the drawings are used to explain the technical solutions of the present disclosure, but do not constitute any limitation to the technical solutions of the present disclosure.
FIG. 1 is a flowchart illustrating a video coding method according to an embodiment of the present disclosure;
FIG. 2 is a flowchart of operations before performing reinforcement learning network training on an image sequence in a video coding method according to an embodiment of the present disclosure;
FIG. 3 is a flowchart of performing reinforcement learning network training on an image sequence in a video coding method according to an embodiment of the present disclosure;
FIG. 4 is a flowchart of obtaining backward coding unit partitioning information in a video coding method according to an embodiment of the present disclosure;
FIG. 5 is a schematic diagram illustrating a principle of obtaining backward coding unit partitioning information in a video coding method according to an embodiment of the present disclosure;
FIG. 6 is a flowchart of obtaining forward coding unit partitioning information in a video coding method according to an embodiment of the present disclosure;
FIG. 7 is a schematic diagram illustrating a principle of obtaining forward coding unit partitioning information in a video coding method according to an embodiment of the present disclosure;
FIG. 8 is a flowchart of obtaining optimized coding unit partitioning information in a video coding method according to an embodiment of the present disclosure;
FIG. 9 is a schematic diagram illustrating a principle of obtaining optimized coding unit partitioning information in a video coding method according to an embodiment of the present disclosure;
FIG. 10 is a flowchart of obtaining game result information in a video coding method according to an embodiment of the present disclosure;
FIG. 11 is a flowchart of obtaining game result information in a video coding method according to another embodiment of the present disclosure;
FIG. 12 is a flowchart of determining a video coding mode for an image sequence in a video coding method according to an embodiment of the present disclosure;
FIG. 13 is a flowchart illustrating a video coding method when game result information does not meet a preset game condition according to an embodiment of the present disclosure;
FIG. 14 is a flowchart illustrating implementation of a video coding method according to an embodiment of the present disclosure; and
FIG. 15 is a schematic diagram of a network device according to an embodiment of the present disclosure.

### DETAIL DESCRIPTION OF EMBODIMENTS

In order to make the objectives, technical solutions and advantages of the present disclosure clearer, the present disclosure are further described in detail below in conjunction with the drawings and the embodiments. It should be understood that the embodiments described herein are merely intended to explain the present disclosure, rather than limiting the present disclosure.

It should be noted that, although division of functional modules is shown in the schematic diagram of the device and although logical orders are illustrated in the flowcharts, in some cases, the operations illustrated or described may be performed with modules divided in a way different from that shown in the schematic diagram of the device, or may be performed in an order different from those illustrated in the flowcharts. The terms "first", "second" and the like in the description, the claims and the above drawings of the present disclosure are used for distinguishing between similar objects, but not necessarily for describing a particular order or a chronological order.

The present disclosure provides a video coding method, a network device, and a computer-readable storage medium. According to the present disclosure, coding block partitioning of an image sequence is achieved by performing reinforcement learning network training on the image sequence, so that optimized coding unit partitioning information corresponding to the image sequence is obtained; optimized coding contents and reference coding contents are evaluated based on a preset evaluation index to determine game result information corresponding to the optimized coding contents, so that the quality of the optimized coding contents is identified according to the game result information; and under the condition that the game result information meets a preset game condition, it may be determined that the optimized coding contents and the optimized coding unit partitioning information related to and corresponding to the game result information meet a preset coding efficiency requirement, so that a coding mode corresponding to the optimized coding unit partitioning information is determined as a video coding mode meeting a coding requirement of the image sequence. Compared with the existing technology, the video coding mode based on reinforcement learning network training is adopted, video coding efficiency can be improved, and a video coding requirement can be met.

The embodiments of the present disclosure are further explained with reference to the drawings.

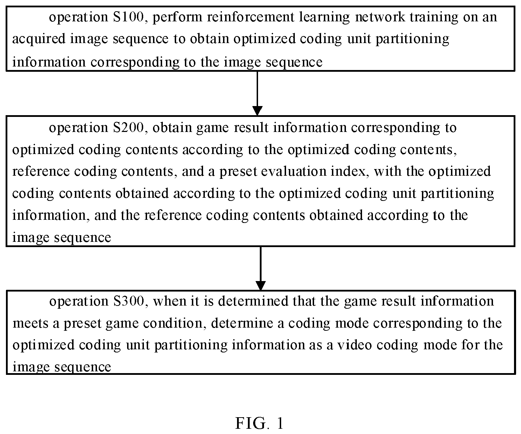

As shown in FIG. 1 which is a flowchart illustrating a video coding method according to an embodiment of the present disclosure, the video coding method includes, but is not limited to, operations S100 to S300.

In operation S100, reinforcement learning network training is performed on an acquired image sequence to obtain optimized coding unit partitioning information corresponding to the image sequence.

In an embodiment, coding block partitioning of the image sequence is achieved by performing reinforcement learning network training on the image sequence, so as to obtain the optimized coding unit partitioning information corresponding to the image sequence. Compared with the existing technology, the obtained optimized coding unit partitioning information is trained by a reinforcement learning network, so that the generated optimized coding unit partitioning information is optimized more accurately. Accordingly, a coding result further derived from the optimized coding unit partitioning information can be optimized more accurately, which is beneficial to improvement in accuracy of video coding.

In an embodiment, a form of the optimized coding unit partitioning information is not limited, and may be customized according to an application scenario. For example, the optimized coding unit partitioning information may be in the form of a one-dimensional matrix corresponding to the image sequence or in a prescribed format of different coding standards, which is not limited in this embodiment. A coding unit may be understood as a matrix to be coded, and a type and parameters of the matrix may be set according to an actual scenario.

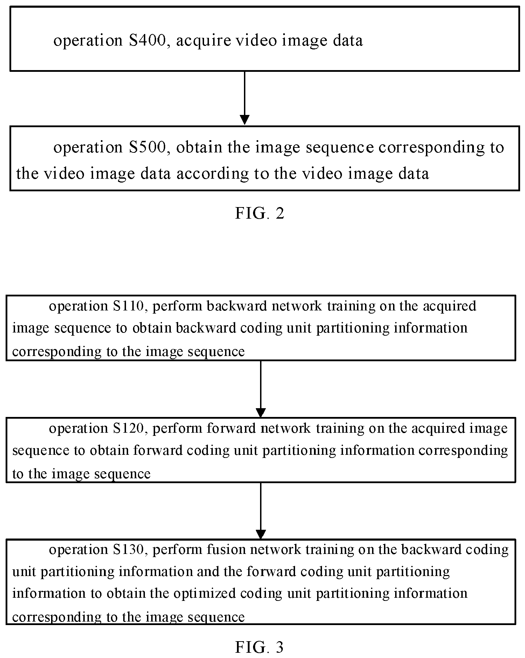

In an example illustrated by FIG. 2, before performing reinforcement learning network training on the acquired image sequence in the operation S 100, the video coding method includes, but is not limited to, operations S400 and S500:
operation S400, acquiring video image data; and
operation S500, obtaining the image sequence corresponding to the video image data according to the video image data.

In an embodiment, the video image data may be acquired in various ways which are not limited in this embodiment. For example, the video image data may be acquired from a standard data set such as an H.265 data set or an H.266 data set, or may be acquired from an actual video. After the video image data is acquired, the video image data may be divided into corresponding data sets by a fixed number of frames, so as to obtaining the image sequence corresponding to the video image data. It can be seen that the image sequence such obtained can well represent original features of the video image data. Moreover, by forming the unified image sequence, further video coding processes can be realized more reliably.

In an embodiment, the reinforcement learning network training may be, but not limited to, training based on a neural network. The training with the neural network can be repeatedly performed, and a weight of the neural network can be adjusted in different times of training, so that the purpose of continuously optimizing the reinforcement learning network training can be achieved, and the reinforcement learning network training can adapt to the image sequence more and more. The neural network can support various basic operations of deep learning, which will not be described in detail here. In order to better explain the way of performing reinforcement learning network training on the acquired image sequence, exemplary embodiments are given below for explanation.

In an example illustrated by FIG. 3, in a case where the reinforcement learning network training includes forward network training, backward network training, and fusion network training, the operation S100 includes, but is not limited to, operations S110 to S130:
operation S 110, performing backward network training on the acquired image sequence to obtain backward coding unit partitioning information corresponding to the image sequence;
operation S120, performing forward network training on the acquired image sequence to obtain forward coding unit partitioning information corresponding to the image sequence; and
operation S130, performing fusion network training on the backward coding unit partitioning information and the forward coding unit partitioning information to obtain the optimized coding unit partitioning information corresponding to the image sequence.

In an embodiment, by performing backward network training and forward network training on the acquired image sequence, the coding partitioning information transmitted in different directions may be obtained. Then, by performing fusion network training on the obtained backward coding unit partitioning information and the obtained forward coding unit partitioning information, the coding unit partitioning information which is a mixture of the best coding unit partitioning information of the backward coding unit partitioning information and the forward coding unit partitioning information may be obtained and taken as the optimized coding unit partitioning information corresponding to the image sequence which is accurate and reliable.

In an embodiment, the image sequence may include, but is not limited to, N frames. The N frames may be ordered, in which case, the frames may be processed correspondingly according to the order of the different frames when the N frames are processed, so that coding unit partitioning information corresponding to each frame may be obtained respectively, so as to further obtain the optimized coding unit partitioning information corresponding to the image sequence according to the different frames.

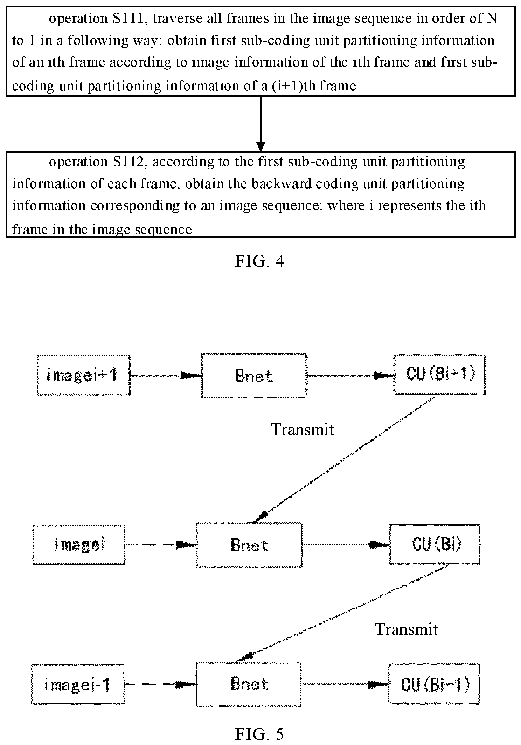

In an example illustrated by FIG. 4, the operation S110 includes, but is not limited to, operations S111 and S112:
operation S111, traversing all frames in the image sequence in order of N to 1 in a following way: obtaining first sub-coding unit partitioning information of an i^{th} frame according to image information of the i^{th} frame and first sub-coding unit partitioning information of a (i+1)^{th} frame; and
operation S112, according to the first sub-coding unit partitioning information of each frame, obtaining the backward coding unit partitioning information corresponding to the image sequence;
where i represents the i^{th} frame in the image sequence.

In an embodiment, all the frames in the image sequence are traversed from back to front, so that the first sub-coding unit partitioning information of a next frame may be acquired in turn, the first sub-coding unit partitioning information of a previous frame may be obtained according to a combination of the first sub-coding unit partitioning information of the next frame and the image information of the previous frame, and so on. In this way, the first sub-coding unit partitioning information of the previous frame may be determined one by one according to the first sub-coding unit partitioning information of the next frame, so as to obtain the first sub-coding unit partitioning information of all the frames, thereby accurately obtaining the backward coding unit partitioning information corresponding to the image sequence. Compared with the existing technology in which merely pixel information of adjacent frames is used without using coding unit partitioning information of the adjacent frames, in this embodiment, the first sub-coding unit partitioning information of each frame is obtained by taking the first sub-coding unit partitioning information of adjacent frames into consideration, which has the advantages as follows: the similarity of partitioning modes of the adjacent frames can be made use of to provide good reference significance, so that the determined first sub-coding unit partitioning information of each frame is more accurate; and moreover, the coding partitioning information is sparser than the pixel information, so that the storage space occupied by the coding partitioning information is smaller, resulting in higher coding efficiency. An exemplary example is given below for explanation.

### Example One

As shown in FIG. 5, the uncoded image sequence, which has N frames numbered 0, 1 ... N-1 respectively, is input. From the (N-1)^{th} frame, the frames are input to a backward propagation network Bnet in neural network structures from back to front. When the i^{th} frame is input to Bnet, the first sub-coding unit partitioning information (denoted by CU(Bi+1), the same below) of the (i+1)^{th} frame is also transmitted into Bnet, and CU(Bi+1) and the image information imagei of the i^{th} frame are subjected to a series of operations including, but not limited to, feature fusion, attention mechanism, and sparse expression, so as to output the first sub-coding unit partitioning information CU(Bi) of the i^{th} frame. When the 0^{th} frame is input, there is no need to input the first sub-coding unit partitioning information of the previous frame as a reference (that is, there is no previous frame at this time). As can be seen from the above example, the first sub-coding unit partitioning information of a previous frame can be obtained according to the first sub-coding unit partitioning information of a next frame, and the first sub-coding unit partitioning information of each frame such determined can express a correlation, so that coding efficiency and accuracy of the determined backward coding unit partitioning information are high, which makes the coding easy and reliable.

It should be noted that Bnet in the neural network structures mainly plays a role of transmitting the coding unit partitioning information from back to front, and a type and a form of Bnet may be selected according to an actual application scenario, which is not limited in this example.

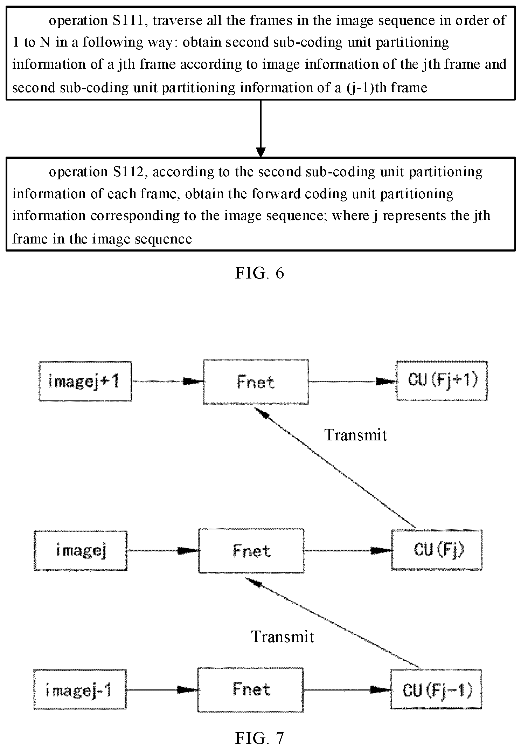

In an example illustrated by FIG. 6, the operation S120 includes, but is not limited to, operations S121 and S122:
operation S121, traversing all the frames in the image sequence in order of 1 to N in a following way: obtaining second sub-coding unit partitioning information of a j^{th} frame according to image information of the j^{th} frame and second sub-coding unit partitioning information of a (j-1)^{th} frame; and
operation S122, according to the second sub-coding unit partitioning information of each frame, obtaining the forward coding unit partitioning information corresponding to the image sequence;
where j represents the j^{th} frame in the image sequence.

In an embodiment, all the frames in the image sequence are traversed from front to back, so that the first sub-coding unit partitioning information of a previous frame may be acquired in turn, the first sub-coding unit partitioning information of a next frame may be obtained according to a combination of the first sub-coding unit partitioning information of the previous frame and the image information of the next frame, and so on. In this way, the first sub-coding unit partitioning information of the next frame may be determined one by one according to the first sub-coding unit partitioning information of the previous frame, so as to obtain the first sub-coding unit partitioning information of all the frames, thereby accurately obtaining the forward coding unit partitioning information corresponding to the image sequence. Compared with the existing technology in which merely the pixel information of adjacent frames is used without using the coding unit partitioning information of the adjacent frames, in this embodiment, the first sub-coding unit partitioning information of each frame is obtained by taking the first sub-coding unit partitioning information of adjacent frames into consideration, which has the advantages as follows: the similarity of partitioning modes of the adjacent frames can be made use of to provide good reference significance, so that the determined first sub-coding unit partitioning information of each frame is more accurate; and moreover, the coding partitioning information is sparser than the pixel information, so that the storage space occupied by the coding partitioning information is smaller, resulting in higher coding efficiency. An exemplary example is given below for explanation.

### Example Two

As shown in FIG. 7, the uncoded image sequence, which has N frames numbered 0, 1 ... N-1 respectively, is input. From the 0^{th} frame, the frames are input to a forward propagation network Fnet in the neural network structures from front to back. When the (j-1)^{th} frame is input to Fnet, the second sub-coding unit partitioning information (denoted by CU(Fj-1), the same below) of the (j-1)^{th} frame is also transmitted into Fnet, and CU(Fj-1) and the image information imagej of the j^{th} frame are subjected to a series of operations including, but not limited to, feature fusion, attention mechanism, and sparse expression, so as to output the second sub-coding unit partitioning information CU(Fj) of the j^{th} frame. When the (N-1)^{th} frame is input, there is no need to input the second sub-coding unit partitioning information of the next frame as a reference (that is, there is no next frame at this time). As can be seen from the above example, the second sub-coding unit partitioning information of a next frame can be obtained according to the second sub-coding unit partitioning information of a previous frame, and the second sub-coding unit partitioning information of each frame such determined can express a correlation, so that coding efficiency and accuracy of the determined forward coding unit partitioning information are high, which makes the coding easy and reliable.

It should be noted that Fnet in the neural network structures mainly plays a role of transmitting the coding unit partitioning information from front to back, and a type and a form of Fnet may be selected according to an actual application scenario, which is not limited in this example.

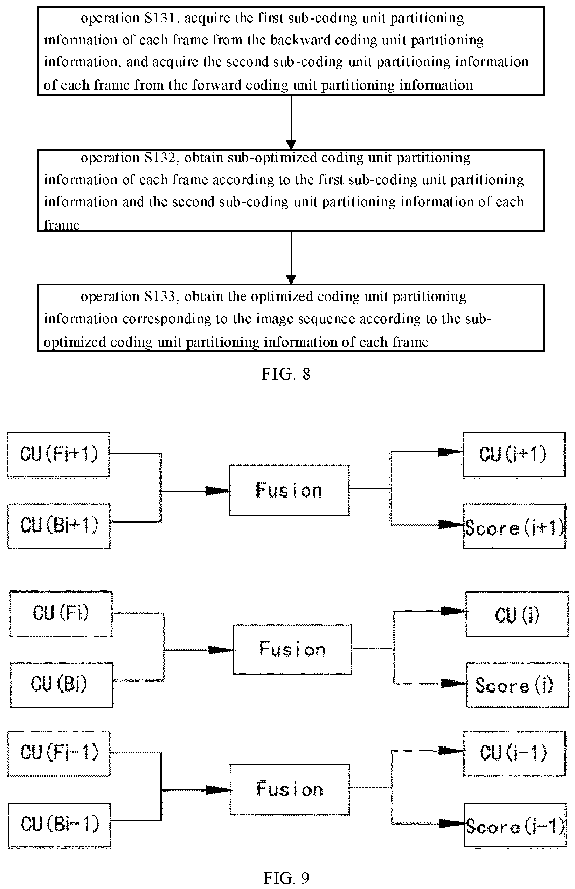

In an example illustrated by FIG. 8, the operation S130 includes, but is not limited to, operations S131 to S133:
operation S131, acquiring the first sub-coding unit partitioning information of each frame from the backward coding unit partitioning information, and acquiring the second sub-coding unit partitioning information of each frame from the forward coding unit partitioning information;
operation S132, obtaining sub-optimized coding unit partitioning information of each frame according to the first sub-coding unit partitioning information and the second sub-coding unit partitioning information of each frame; and
operation S133, obtaining the optimized coding unit partitioning information corresponding to the image sequence according to the sub-optimized coding unit partitioning information of each frame.

In an embodiment, since the first sub-coding unit partitioning information and the second sub-coding unit partitioning information respectively represent coding modes of each frame in different scenarios, in order to further combine advantages of the coding modes in each scenario, the first sub-coding unit partitioning information and the second sub-coding unit partitioning information of each frame are subjected to a corresponding fusion processing, so as to output the sub-optimized coding unit partitioning information capable of better representing optimized coding characteristics of each frame, thereby obtaining the final optimized coding unit partitioning information according to the sub-optimized coding unit partitioning information of each frame. It should be understood that the optimized coding unit partitioning information has the sub-optimized coding unit partitioning information of each frame combined therein, thereby realizing high degree of optimization and facilitating improving the video coding efficiency.

In an embodiment, a way of the fusion processing may include, but is not limited to, taking an average value of the first sub-coding unit partitioning information and the second sub-coding unit partitioning information, or selecting one of the first sub-coding unit partitioning information and the second sub-coding unit partitioning information that meets a preset output requirement as a fusion output. The preset output requirement may be customized, or set through comparison, or set through calculation, which is not limited in this embodiment.

An exemplary example is given below for explanation.

### Example Three

As shown in FIG. 9, taking the i^{th} frame as an example, the first sub-coding unit partitioning information CU(Bi) and the second sub-coding unit partitioning information CU(Fi) of the i^{th} frame which have been determined are merged and input to a fusion network Fusion, and subjected to network training by Fusion to output the sub-optimized coding unit partitioning information CU(i) of the i^{th} frame. In another embodiment, reinforcement learning prediction information Score(i) corresponding to the i^{th} frame is further output, that is, the optimized coding unit partitioning information further includes the reinforcement learning prediction information. Score(i) is configured to represent a game success prediction probability corresponding to the optimized coding unit partitioning information, that is, a degree of optimization of the output CU(i) is analyzed when the network training by Fusion is performed, so as to evaluate a winning probability of the output CU(i) over preset coding information. For example, a proportion of a video coding rate corresponding to CU(i) in a certain interval, which is determined according to an analysis experiment, is a value, and meanwhile, a proportion of a video coding rate corresponding to the preset coding information in the same interval, which is determined according to the analysis experiment, is another value, and then Score(i) is generated by comparing the two values. It should be understood that the purpose of generating the reinforcement learning prediction information is to facilitate evaluating the degree of optimization of the sub-optimized coding unit partitioning information more accurately and more reliably, but it should be emphasized that the reinforcement learning prediction information is merely used for prediction for further adjustment, and a comparison result needs to be obtained in an actual application scenario.

It should be noted that the preset coding information mentioned in the above embodiment may be coding information obtained by an existing coding mode in the existing technology, or predetermined coding information, which may be selected by those of ordinary skill in the art according to an actual application scenario and is not limited in this embodiment. The game success prediction probability corresponding to the reinforcement learning prediction information may be expressed in various forms. For example, the game success prediction probability may be an output value of [-1,1], and it may be set that -1 represents a definite failure (the success prediction probability is 0), 1 represents a definite success (the success prediction probability is 1), and 0 represents a draw (the success prediction probability is 0.5). Or, the game success prediction probability may be directly expressed by a probability value. For example, 0.8 represents a prediction probability indicating a game success of the optimized coding unit partitioning information, while 0.2 represents a prediction probability indicating a game failure of the optimized coding unit partitioning information, and what the other values represent are similar to those described in the above example, may be set according to an actual scenario, and will not be described in detail in this embodiment for avoiding redundancy.

In operation S200, game result information corresponding to optimized coding contents is obtained according to the optimized coding contents, reference coding contents, and a preset evaluation index, with the optimized coding contents obtained according to the optimized coding unit partitioning information, and the reference coding contents obtained according to the image sequence.

In an embodiment, the optimized coding contents and the reference coding contents are evaluated based on the preset evaluation index to determine the game result information corresponding to the optimized coding contents, so that quality of the optimized coding contents may be identified according to the game result information. In other words, which coding contents have a better effect may be determined, so that the better coding contents may be selected, so as to obtain a more suitable video coding mode based on the coding contents.

It should be understood that a type of the preset evaluation index is not limited, and may be customized according to an application scenario. For example, the preset evaluation index may include, but is not limited to, various objective indicators of image quality such as a peak signal-to-noise ratio and image similarity and compression performance indicators such as a coding compression ratio, or a coding speed indicator (for evaluating an increase of a video coding speed), or a subjective quality indicator according to an application scenario, or a weighted sum of the above indicators, which is not limited in this embodiment.

In an embodiment, the reference coding contents may be coding contents corresponding to coding information obtained by using an existing coding mode in the existing technology. For example, existing coding information is determined by using the acquired image sequence and an existing neural network, and then the reference coding contents are generated according to the existing coding information. Or, the reference coding contents may be coding information determined in advance by using a set neural network. Or, the reference coding contents may be selected by those of ordinary skill in the art according to an actual application scenario, which is not limited in this embodiment. It should be noted that the coding information corresponding to the reference coding contents is not trained by the reinforcement learning network, which is different from the optimized coding unit partitioning information provided in this embodiment.

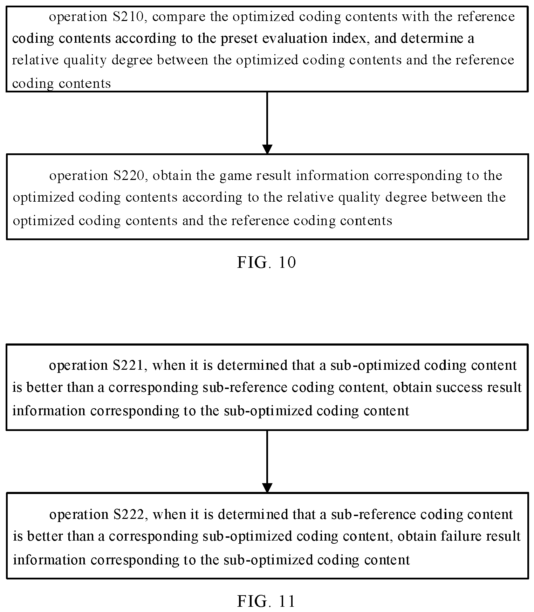

In an example illustrated by FIG. 10, the operation S200 includes, but is not limited to, operations S210 and S220:
operation S210, comparing the optimized coding contents with the reference coding contents according to the preset evaluation index, and determining a relative quality degree between the optimized coding contents and the reference coding contents; and
operation S220, obtaining the game result information corresponding to the optimized coding contents according to the relative quality degree between the optimized coding contents and the reference coding contents.

In an embodiment, the optimized coding contents are compared with the reference coding contents from one or more aspects according to the preset evaluation index, so that the better one may be determined, and then the game result information corresponding to the optimized coding contents may be determined according to the comparison result. In other words, the optimized coding contents being better or worse than the reference coding contents may be indirectly indicated by the game result information. Therefore, which coding contents are corresponding to a better coding mode may be determined directly according to the game result information in subsequent operations.

In an embodiment, the game result information includes success result information and failure result information. It should be understood that the success result information indicates that the optimized coding contents are better than the reference coding contents, and the failure result information indicates that the optimized coding contents are worse than the reference coding contents. The optimized coding contents include several sub-optimized coding contents, and the reference coding contents include several sub-reference coding contents. Accordingly, the definitions of the success result information and the failure result information are applicable to the sub-optimized coding contents and the sub-reference coding contents, which will not be described in detail here for avoiding redundancy.

In an example illustrated by FIG. 11, the operation S220 includes, but is not limited to, operations S221 and S222:
operation S221, when it is determined that a sub-optimized coding content is better than a corresponding sub-reference coding content, obtaining success result information corresponding to the sub-optimized coding content; and
operation S222, when it is determined that a sub-reference coding content is better than a corresponding sub-optimized coding content, obtaining failure result information corresponding to the sub-optimized coding content.

In an embodiment, by comparing the quality of the sub-optimized coding contents with the quality of the sub-reference coding contents, the quality of the coding content in each frame may be determined, so that the success result information corresponding to the sub-optimized coding contents and the failure result information corresponding to the sub-optimized coding contents may be determined, that is, a success result or a failure result of the coding content of each frame may be analyzed one by one, thereby obtaining distribution of the success results and the failure results of all the frames macroscopically.

In operation S300, when it is determined that the game result information meets a preset game condition, a coding mode corresponding to the optimized coding unit partitioning information is determined as a video coding mode for the image sequence.

In an embodiment, the coding block partitioning of the image sequence is achieved by performing reinforcement learning network training on the image sequence, so that the optimized coding unit partitioning information corresponding to the image sequence is obtained; the optimized coding contents and the reference coding contents are evaluated based on the preset evaluation index to determine the game result information corresponding to the optimized coding contents, so that the quality of the optimized coding contents is identified according to the game result information; and under the condition that the game result information meets the preset game condition, it may be determined that the optimized coding contents and the optimized coding unit partitioning information related to and corresponding to the game result information meet a preset coding efficiency requirement, so that the coding mode corresponding to the optimized coding unit partitioning information is determined as a video coding mode meeting a coding requirement of the image sequence. Compared with the existing technology, in this embodiment, the video coding mode based on reinforcement learning network training is adopted, the video coding efficiency can be improved, and the video coding requirement can be met.

It should be noted that the coding mode corresponding to the optimized coding unit partitioning information may be applied to all scenarios where video coding is needed. For example, the coding mode corresponding to the optimized coding unit partitioning information may be applied to a Video Processing Unit (VPU), a built-in algorithm of a video coding/decoding chip, an intelligent cabin, video compression, or video transmission, which is not limited in this embodiment.

In an embodiment, the preset game condition may be expressed in different forms which may be, but not limited to, a winning probability, a win-lose distribution standard deviation, and a win-lose distribution variance, which is not limited in the embodiment.

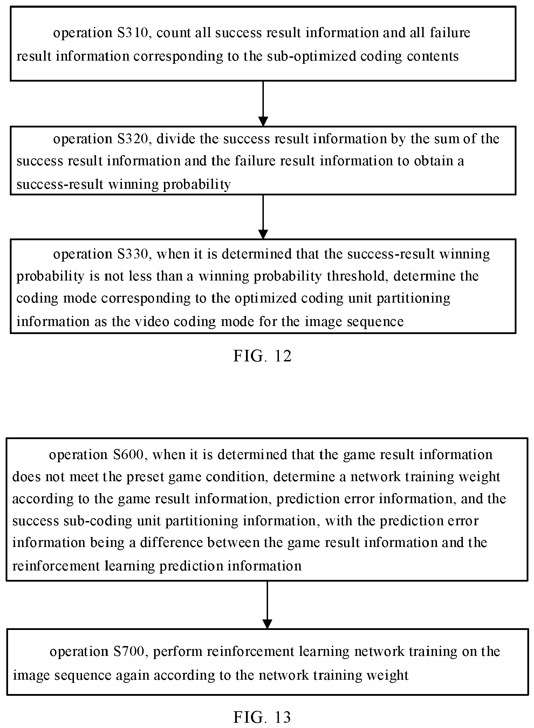

In an example illustrated by FIG. 12, the operation S300 includes, but is not limited to, operations S310 to S330:
operation S310, counting all success result information and all failure result information corresponding to the sub-optimized coding contents;
operation S320, dividing the success result information by the sum of the success result information and the failure result information to obtain a success-result winning probability; and
operation S330, when it is determined that the success-result winning probability is not less than a winning probability threshold, determining the coding mode corresponding to the optimized coding unit partitioning information as the video coding mode for the image sequence.

In an embodiment, all the success result information and all the failure result information corresponding to the sub-optimized coding contents are counted, a calculation is performed to obtain the success-result winning probability, and then the success-result winning probability is compared with the winning probability threshold, so that, when it is determined that the success-result winning probability is not less than the winning probability threshold, that is, the comparison of the whole coding information of the image sequence can meet a preset parameter requirement, the coding mode corresponding to the optimized coding unit partitioning information may be determined as the video coding mode for the image sequence. In other words, the coding mode corresponding to the optimized coding unit partitioning information which is determined with the above method is a coding mode capable of improving the video coding efficiency of the image sequence.

It should be understood that the winning probability threshold may be set according to different application scenarios, and is generally set between 50% and 60%, and a value of the winning probability threshold is not limited in the embodiment.

In an example illustrated by FIG. 13, in a case where the optimized coding unit partitioning information includes success sub-coding unit partitioning information corresponding to the success result information, the video coding method according to an embodiment of the present disclosure further includes, but is not limited to, operations S600 and S700:
operation S600, when it is determined that the game result information does not meet the preset game condition, determining a network training weight according to the game result information, prediction error information, and the success sub-coding unit partitioning information, with the prediction error information being a difference between the game result information and the reinforcement learning prediction information; and
operation S700, performing reinforcement learning network training on the image sequence again according to the network training weight.

In an embodiment, when it is determined that the game result information does not meet the preset game condition, it is indicated that the obtained game result information cannot meet a requirement of the preset game condition. Since the game result information is derived from the optimized coding unit partitioning information, it can be determined that the optimized coding unit partitioning information obtained by the reinforcement learning network training cannot meet the requirement, and the reinforcement learning network training needs to be adjusted. Therefore, the network training weight of the neural network is re-determined according to the game result information, the prediction error information, and the success sub-coding unit partitioning information, so as to make the network training weight be matched with the requirement of the preset game condition. Then, the image sequence is subjected to reinforcement learning network training again according to the network training weight, thereby obtaining updated optimized coding unit partitioning information which meets the requirement.

It should be noted that the prediction error information is the difference between the game result information and the reinforcement learning prediction information, reflects the difference between an actual win-or-lose result and a predicted win-or-lose result, and may be used to correct a probability of the predicted win-or-lose result, so the prediction error information is used for adjustment to the network training weight. The success sub-coding unit partitioning information reflects the success results, and thus is used as a re-training weight parameter, which can enhance an influence of the success results and facilitate correcting a probability of obtaining the success results by guidance. The game result information reflects an influence of a current actual training result, and by taking the game result information as a part of the retraining weight, the influence of the current training result can be kept, and a next training result can be prevented from producing a large error range as much as possible.

It should be understood that a success probability corresponding to the game result information may be may be expressed in various forms. For example, the success probability may be an output value of [-1,1], and it may be set that -1 represents a definite failure (the success probability is 0), 1 represents a definite success (the success probability is 1), and 0 represents a draw (the success probability is 0.5). Or, the success probability may be directly expressed by a probability value. For example, 0.8 represents a probability indicating a game success of the optimized coding unit partitioning information, while 0.2 represents a probability indicating a game failure of the optimized coding unit partitioning information, and what the other values represent are similar to those described in the above embodiment, may be set according to an actual scenario, and will not be described in detail in this embodiment for avoiding redundancy.

In an embodiment, an experience pool is provided in the neural network, and is configured to store related weight parameters, which include the game result information, the prediction error information, and the success sub-coding unit partitioning information, and may further include basic network weight parameters related to the neural network, and the basic network weight parameters may be set correspondingly according to different neural networks and will not be described in detail here. Since the experience pool may be updated right after each time the evaluation of the coding mode is completed, the experience pool can be continuously updated. Thus, it can be ensured that each time the input image sequence is subjected to reinforcement learning network training, the reinforcement learning network training is performed based on the updated network weight, so that efficiency of the reinforcement learning network training of the image sequence can be improved.

A related example is given below for explanation.

### Example Four

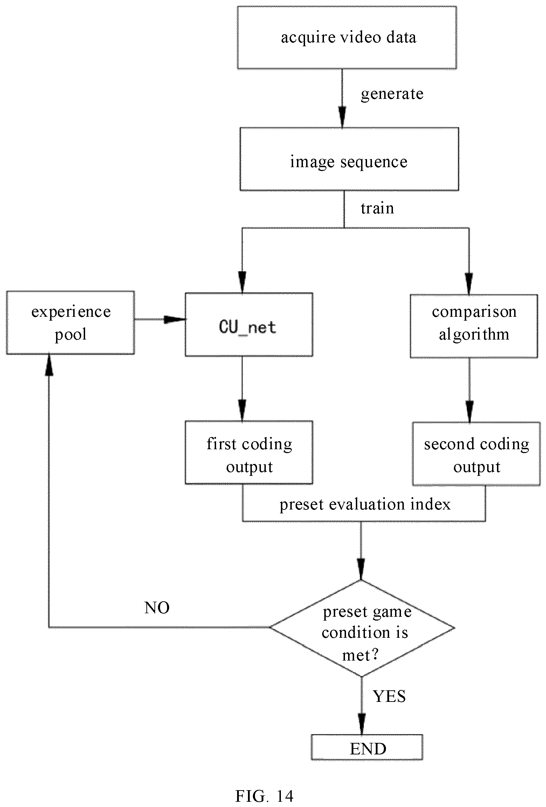

As shown in FIG. 14, the video data is first provided, which includes the operations such as acquiring the video data and determining the image sequence according to the video data. Then, the image sequence is subjected to the corresponding processing: on the one hand, the input image sequence is subjected to CU_net and related coding to obtain a first coding output, with CU_net being a network set of Bnet, Fnet, and Fusion; and on the other hand, the input image sequence is subjected to an existing comparison algorithm and corresponding coding to obtain a second coding output. Then, the first coding output and the second coding output are compared with the preset evaluation index to obtain the game result information, and it is accordingly determined whether to update the experience pool corresponding to CU_net: if the game result information meets the preset game condition, the experience pool does not need to be updated; and if the game result information does not meet the preset game condition, the experience pool is updated, and reinforcement learning network training is performed again. As can be seen, in the video coding method provided in the embodiments of the present disclosure, the input is the uncoded image sequence, the image sequence is automatically partitioned into blocks with the neural network, and the video coding efficiency is greatly improved while ensuring high-quality block partitioning. Compared with the existing technology, the video coding method provided in the embodiments of the present disclosure can realize real-time high-quality coding.

In an embodiment, even if the game result information meets the preset game condition, the finally obtained coding result may be partitioned with an AI partition tool, whether the coding result needs to be output is further determined according to a partitioning result. In general, if the coding quality meets a standard, the coding result can be output; and if the coding quality does not meet the standard, the image sequence corresponding to the coding result may be trained again.

Furthermore, in another embodiment, the updating of the experience pool may be implemented in another way.

Firstly, the image sequence in the data set is respectively subjected to reinforcement learning network training and comparison algorithm training once, and the reinforcement learning network training and the comparison algorithm training are performed based on neural networks CU_net1, CU_net2 respectively. In the network training, CU_net1 generates optimized coding unit partitioning information corresponding to each frame in the input image sequence through modules such as Fnet, Bnet and Fusion, generates a prediction probability of a result, and inputs the optimized coding unit partitioning information and the prediction probability to CU_net2 for interaction. Similarly, the same operations are performed by CU_net2. After coding information partitioning is completed, a subsequent coding process is started. After a group of image sequences are trained, two coding results may be evaluated and compared, a win-or-lose result is recorded, and the coding unit partitioning information and the prediction error information corresponding to the winner are added to the experience pool to facilitate the updating of the network weight. After all the image sequences are trained, a total winning probability is counted. If the winning probability of one party reaches more than 55% over the other party, coding parameters of the party with the lower winning probability are updated according to related coding parameters of the party with the higher winning probability, and the network training is stopped when an effect of one party reaches a desired performance index. As can be seen, in this embodiment, respective influences of the reinforcement learning network training and the comparison algorithm training on the coding information are considered, and by interacting the coding information of the reinforcement learning network training with the coding information of the comparison algorithm training, the effect of the coding information partitioning of the reinforcement learning network training is further optimized; and in particular, a comparison algorithm can be added to the reinforcement learning network training with the above method, which facilitates obtaining a better coding unit partitioning result.

It should be noted that the above embodiment and the foregoing embodiment of directly performing reinforcement learning network training on the acquired image sequence may be implemented together or independently. However, whether being implemented together or independently, the coding unit partitioning for the image sequence can be optimized from different aspects, so as to further improve the video coding efficiency.

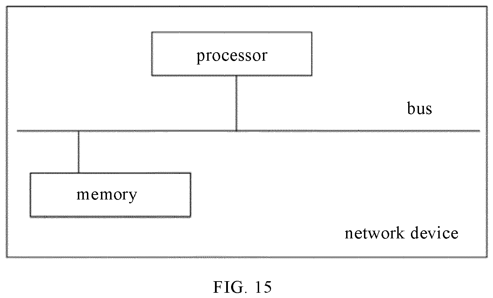

In addition, as shown in FIG. 15, an embodiment of the present disclosure further provides a network device, including: a memory, a processor, and a computer program which is stored in the memory and executable by the processor.

The processor may be connected to the memory via a bus or by other means.

Non-transitory software programs and instructions for implementing the video coding method according to the above embodiments are stored in the memory. When the non-transitory software programs and instructions are executed by the processor, the video coding method according to any of the above embodiments is performed, for example, the following operations which are described above are performed: the method operations S100 to S300 shown in FIG. 1, the method operations S400 and S500 shown in FIG. 2, the method operations S110 to S130 shown in FIG. 3, the method operations S111 and S 112 shown in FIG. 4, the method operations S121 and S122 shown in FIG. 6, the method operations S131 to S133 shown in FIG. 8, the method operations S210 and S220 shown in FIG. 10, the method operations S221 and S222 shown in FIG. 11, the method operations S310 to S330 shown in FIG. 12, or the method operations S600 and S700 shown in FIG. 13.

The device embodiment described above is merely for illustration, the units described in the device embodiment as separate parts may be physically separate or not, that is, those units may be located in one place or distributed in a plurality of network units. Some or all of the modules in the device embodiment may be selected according to actual needs to achieve the objective of the technical solution of the device embodiment.

Furthermore, an embodiment of the present disclosure further provides a computer-readable storage medium storing computer-executable instructions. When the computer-executable instructions are executed by a processor or a controller such as the processor in the above device embodiment, the processor may be caused to perform the video coding method according to the above embodiments, for example, the following operations which are described above are performed: the method operations S100 to S300 shown in FIG. 1, the method operations S400 and S500 shown in FIG. 2, the method operations S110 to S130 shown in FIG. 3, the method operations S111 and S112 shown in FIG. 4, the method operations S121 and S122 shown in FIG. 6, the method operations S131 to S133 shown in FIG. 8, the method operations S210 and S220 shown in FIG. 10, the method operations S221 and S222 shown in FIG. 11, the method operations S310 to S330 shown in FIG. 12, or the method operations S600 and S700 shown in FIG. 13.

The embodiments of the present disclosure include: performing reinforcement learning network training on the acquired image sequence to obtain the optimized coding unit partitioning information corresponding to the image sequence; obtaining the game result information corresponding to the optimized coding contents according to the optimized coding contents, the reference coding contents, and the preset evaluation index, with the optimized coding contents obtained according to the optimized coding unit partitioning information, and the reference coding contents obtained according to the image sequence; and when it is determined that the game result information meets the preset game condition, determining the coding mode corresponding to the optimized coding unit partitioning information as the video coding mode for the image sequence. According to the technical solutions provided in the embodiments of the present disclosure, the coding block partitioning of the image sequence is achieved by performing reinforcement learning network training on the image sequence, so that the optimized coding unit partitioning information corresponding to the image sequence is obtained; the optimized coding contents and the reference coding contents are evaluated based on the preset evaluation index to determine the game result information corresponding to the optimized coding contents, so that the quality of the optimized coding contents is identified according to the game result information; and under the condition that the game result information meets the preset game condition, it may be determined that the optimized coding contents and the optimized coding unit partitioning information related to and corresponding to the game result information meet the preset coding efficiency requirement, so that the coding mode corresponding to the optimized coding unit partitioning information is determined as the video coding mode meeting the coding requirement of the image sequence. Compared with the existing technology, the video coding mode based on reinforcement learning network training is adopted, the video coding efficiency can be improved, and the video coding requirement can be met.

It should be understood by those of ordinary skill in the art that all or some of the operations and the systems in the method disclosed above may be implemented as software, firmware, hardware, or suitable combinations thereof. Some or all of physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory (RAM), a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

Several implementations of the present disclosure are described in detail above, but the present disclosure is not limited thereto. Those of ordinary skill in the art may make various equivalent variations or replacements without departing from the essence of the present disclosure, and all those equivalent variations or replacements are included in the scope as defined in the appended claims of the present disclosure.

## Claims

1. A video coding method, comprising:
performing reinforcement learning network training on an acquired image sequence to obtain optimized coding unit partitioning information corresponding to the image sequence;
obtaining game result information corresponding to optimized coding contents according to the optimized coding contents, reference coding contents, and a preset evaluation index, wherein the optimized coding contents are obtained according to the optimized coding unit partitioning information, and the reference coding contents are obtained according to the image sequence; and
in response to determining that the game result information meets a preset game condition, determining a coding mode corresponding to the optimized coding unit partitioning information as a video coding mode for the image sequence.

2. The video coding method of claim 1, wherein the reinforcement learning network training comprises forward network training, backward network training, and fusion network training; and performing reinforcement learning network training on the acquired image sequence to obtain the optimized coding unit partitioning information corresponding to the image sequence comprises:
performing the backward network training on the acquired image sequence to obtain backward coding unit partitioning information corresponding to the image sequence;
performing the forward network training on the acquired image sequence to obtain forward coding unit partitioning information corresponding to the image sequence; and
performing the fusion network training on the backward coding unit partitioning information and the forward coding unit partitioning information to obtain the optimized coding unit partitioning information corresponding to the image sequence.

3. The video coding method of claim 2, wherein the image sequence comprises N frames; and performing the backward network training on the acquired image sequence to obtain the backward coding unit partitioning information corresponding to the image sequence comprises:
traversing all frames in the image sequence in order of N to 1 in a following way: obtaining first sub-coding unit partitioning information of an ith frame according to image information of the ith frame and first sub-coding unit partitioning information of a (i+1)th frame; and
according to first sub-coding unit partitioning information of each frame, obtaining the backward coding unit partitioning information corresponding to the image sequence;
where i represents the ith frame in the image sequence.

4. The video coding method of claim 3, wherein performing the forward network training on the acquired image sequence to obtain the forward coding unit partitioning information corresponding to the image sequence comprises:
traversing all the frames in the image sequence in order of 1 to N in a following way: obtaining second sub-coding unit partitioning information of a jth frame according to image information of the jth frame and second sub-coding unit partitioning information of a (j-1)th frame; and
according to second sub-coding unit partitioning information of each frame, obtaining the forward coding unit partitioning information corresponding to the image sequence;
where j represents the jth frame in the image sequence.

5. The video coding method of claim 4, wherein performing the fusion network training on the backward coding unit partitioning information and the forward coding unit partitioning information to obtain the optimized coding unit partitioning information corresponding to the image sequence comprises:
acquiring the first sub-coding unit partitioning information of each frame from the backward coding unit partitioning information, and acquiring the second sub-coding unit partitioning information of each frame from the forward coding unit partitioning information;
obtaining sub-optimized coding unit partitioning information of each frame according to the first sub-coding unit partitioning information and the second sub-coding unit partitioning information of each frame; and
obtaining the optimized coding unit partitioning information corresponding to the image sequence according to the sub-optimized coding unit partitioning information of each frame.

6. The video coding method of claim 1, wherein obtaining the game result information corresponding to the optimized coding contents according to the optimized coding contents, the reference coding contents, and the preset evaluation index comprises:
comparing the optimized coding contents with the reference coding contents according to the preset evaluation index, and determining a relative quality degree between the optimized coding contents and the reference coding contents; and
obtaining the game result information corresponding to the optimized coding contents according to the relative quality degree between the optimized coding contents and the reference coding contents.

7. The video coding method of claim 6, wherein the game result information comprises success result information and failure result information, the optimized coding contents comprise several sub-optimized coding contents, and the reference coding contents comprise several sub-reference coding contents; and obtaining the game result information corresponding to the optimized coding contents according to the relative quality degree between the optimized coding contents and the reference coding contents comprises:
in response to determining that a sub-optimized coding content is better than a corresponding sub-reference coding content, obtaining success result information corresponding to the sub-optimized coding content; and
in response to determining that a sub-reference coding content is better than a corresponding sub-optimized coding content, obtaining failure result information corresponding to the sub-optimized coding content.

8. The video coding method of claim 7, wherein the preset game condition comprises a winning probability threshold; and determining, in response to determining that the game result information meets the preset game condition, the coding mode corresponding to the optimized coding unit partitioning information as the video coding mode for the image sequence comprises:
counting all success result information and all failure result information corresponding to the sub-optimized coding contents;
dividing the success result information by a sum of the success result information and the failure result information to obtain a success-result winning probability; and
in response to determining that the success-result winning probability is not less than the winning probability threshold, determining the coding mode corresponding to the optimized coding unit partitioning information as the video coding mode for the image sequence.

9. The video coding method of claim 7, wherein the optimized coding unit partitioning information comprises reinforcement learning prediction information and success sub-coding unit partitioning information corresponding to the success result information, and the reinforcement learning prediction information is configured to represent a game success prediction probability corresponding to the optimized coding unit partitioning information; and the method further comprises:
in response to determining that the game result information does not meet the preset game condition, determining a network training weight according to the game result information, prediction error information, and the success sub-coding unit partitioning information, where the prediction error information is a difference between the game result information and the reinforcement learning prediction information; and
performing the reinforcement learning network training on the image sequence again according to the network training weight.

10. The video coding method of claim 1, wherein before performing the reinforcement learning network training on the acquired image sequence, the method further comprises:
acquiring video image data; and
obtaining the image sequence corresponding to the video image data according to the video image data.

11. A network device, comprising: a memory, a processor, and a computer program which is stored in the memory and executable by the processor, wherein the processor is configured to perform the video coding method of any one of claims 1 to 10 when executing the computer program.

12. A computer-readable storage medium storing computer-executable instructions configured to perform the video coding method of any one of claims 1 to 10.
